# EUROPEAN PATENT APPLICATION

(11) **EP 2 103 414 A1**
(43) Date of publication of application: **23.09.2009**
(21) Application number: 09002615.4
(22) Date of filing: 25.02.2009
(51) Int. Cl.: B29C 51/26, B29C 51/08

(54) **An adjustable clamping table for thermoforming machines**

(30) Priority: 17.03.2008 IT MI20080445
(71) Applicant: Moretti, Bruno, 27029 Vigevano (PV) (IT)
(72) Inventor: Moretti, Bruno, 27029 Vigevano (PV) (IT)
(74) Representative: Coloberti, Luigi

(57) **Abstract**

An adjustable clamping table (12) for a molding station of a thermoforming machine. The clamping table (12) comprises a stationary base plate (17) defining a rectangular opening of a window having crosswise and longitudinally extending sides; a pair of upper (P1, P2) and a pair of lower (P3, P4) movable plates sliding supported by the stationary plate (17), at right-angled directions; to each clamping bars (26; 30, 31) along internal edges of the sliding plates (P1, P2; P3, P4), said sliding plates (P1, P2; P3, P4) having longitudinal edges defining an upper resting surface (27, 35) for supporting and locking a sheet (15) of thermoformable plastic material, a resting and sealing bottom surface for a thermoforming mold. The clamping bars (30, 31) of lower cross plates (P3, P4) being telescopically adjustable and supported by respective metal sheets which extend from the internal edge of the same cross plates (P3, P4)

## Description

### FIELD OF THE INVENTION

The invention refers to thermoforming machines and, in particular, concerns an adjustable table for supporting and clamping sheets of thermoformable material, for examples plastic sheets, during a thermoforming process.

### BACKGROUND OF THE INVENTION

Traditional thermoforming machines, both of single station and for production line plants, usually comprise a vacuum box for containing a shaping mold movably supported between a lowered position and a raised position where the mold protrudes slightly through a rectangular aperture of a window, provided in a clamping table which closes the top of the vacuum box.

During thermoforming, the sheet material must therefore be supported and sealingly locked against the edges of the window, by appropriate sealing means arranged between the supporting table, the thermoformable sheet material and the thermoforming mold, or its movable supporting platen.

Since the dimension of the sheet material to be thermoformed may vary in both length and width, the need exists to vary and adjust the longitudinal and cross dimensions of the window of the clamping table to each change in format, always ensuring a good seal, both in a vacuum and under pressurized air conditions, with the interior of the box. Various adjustable locking tables have been proposed, e.g. by EP-A-0.882.566, EP-A-0.623.449, EP-A-0692.365 and EP-A-0.997.258.

In particular, EP-A-0.882.566 and EP-A-0.997.258, which constitutes the closest prior art, show an adjustable clamping table comprising a first and a second pair of movable plates at right-angled directions; the plates slide along overlapping surfaces, directly in contact with each other, above stationary plates defining lateral sides of the box.

In turn, EP-A-0.692.365 shows an adjustable clamping table comprising four coplanar support plates, sliding along dovetail guides positioned along longitudinal sides of the same support plates.

In contrast, EP-A-0.623.449 shows a clamping table comprising a stationary frame provided by elongated bars, and an adjustable frame comprising elongated bars slidably supported by the underlying stationary frame.

The clamping tables in the prior art, besides requiring use of appropriate supporting frames, with consequent costs and constructional complications, due to the high width and overlapping of the movable plates in respect to the stationary plates, makes achieving the necessary seal with the box for the thermoforming mold, extremely difficult; also, clamping tables with relatively high comparative dimensions are sometimes required, with the consequent need for modifying the molds, and greater waste of material.

### OBJECTS OF THE INVENTION

One object of the invention is to provide an adjustable table for clamping sheet material in thermoforming machines which, besides having a simple construction, also guarantees a good seal with both the sheet of thermoformable material, and with the vacuum box for the mold, particularly in the most critical points of the support plates which define the edges of the window.

A further object of the invention is to provide an adjustable table for clamping sheet material in thermoforming machines, as previously mentioned, suitable for supporting and locking sheet material of different dimensions, within a wide adjustable range, always maintaining good seal conditions with both the sheet of thermoformable material and the vacuum box.

A further object of the invention is to provide an adjustable clamping table for thermoforming machines, which does not require any modification of the molds, allowing a reduction of waste of the thermoformable material to a minimum.

### BRIEF DESCRIPTION OF THE INVENTION

The foregoing can be achieved by means of an adjustable clamping table for thermoforming machines as claimed in claim 1.

According to a first embodiment of the invention, a clamping table for thermoforming machines has been provided, the clamping table comprising:
first and second pair of longitudinally and crosswise extending support plates which are movable in relation to each other on overlapping planes, said support plates having internal edges conformed to define a rectangular opening of an adjustable window through which a thermoforming mold extends, characterized by comprising:
   a stationary base plate conformed with longitudinal and cross sides defining the rectangular opening of the window, said base plate having upper and bottom planar surfaces;
   a pair of upper plates slidably supported by the base plate, in a first direction;
   a pair of bottom plates slidably supported base plate, in a second direction at a right-angle to the sliding direction of the upper plates;
   a clamping bar along an internal edge of each sliding plate, the clamping bars having co-planar upper edges defining an upper surface for supporting and locking a sheet of thermoformable material, and bottom edges defining a flat sealing surface for the thermoforming mold, coplanar to the bottom surface of the base plate;
   metal sheets for supporting the clamping bars extending from the internal edge of each bottom sliding plate; and
   elastically yielding sealing means between the mold, and said metal sheets for supporting the clamping bars.

### BRIEF DESCRIPTION OF THE DRAWINGS

These and further characteristics of the adjustable clamping table for thermoforming machines according to the invention, will be more clearly evident from the following description and the examples of the accompanying figures, in which:
Fig. 1 is a longitudinal section of a vacuum box of a thermoforming machine, comprising an adjustable clamping table according to the invention;
Fig. 2 is a top view according to line 2-2 of figure 1, with the clamping table in a maximum opening condition;
Fig. 3 is an enlarged cross sectional view, according to line 3-3 of figure 2;
Fig. 4 is a more enlarged detail of figure 3;
Fig. 5 is an enlarged cross section according to line 5-5 of figure 2.

### DETAILED DESCRIPTION OF THE INVENTION

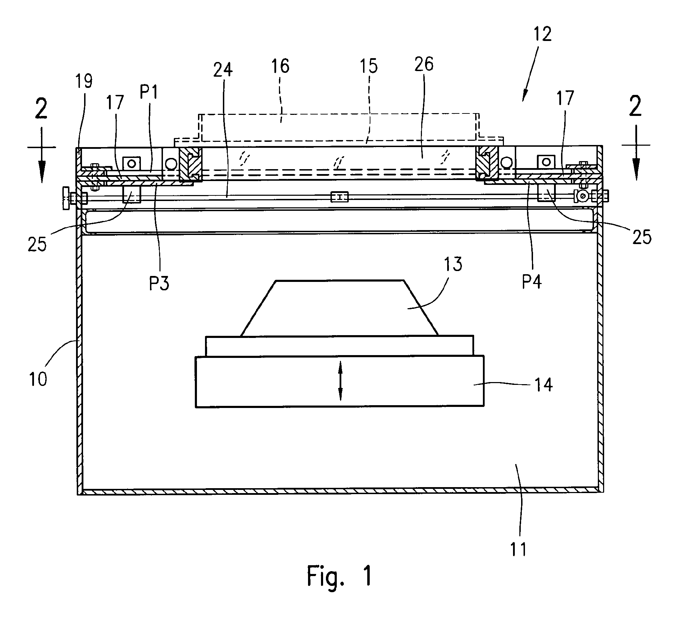

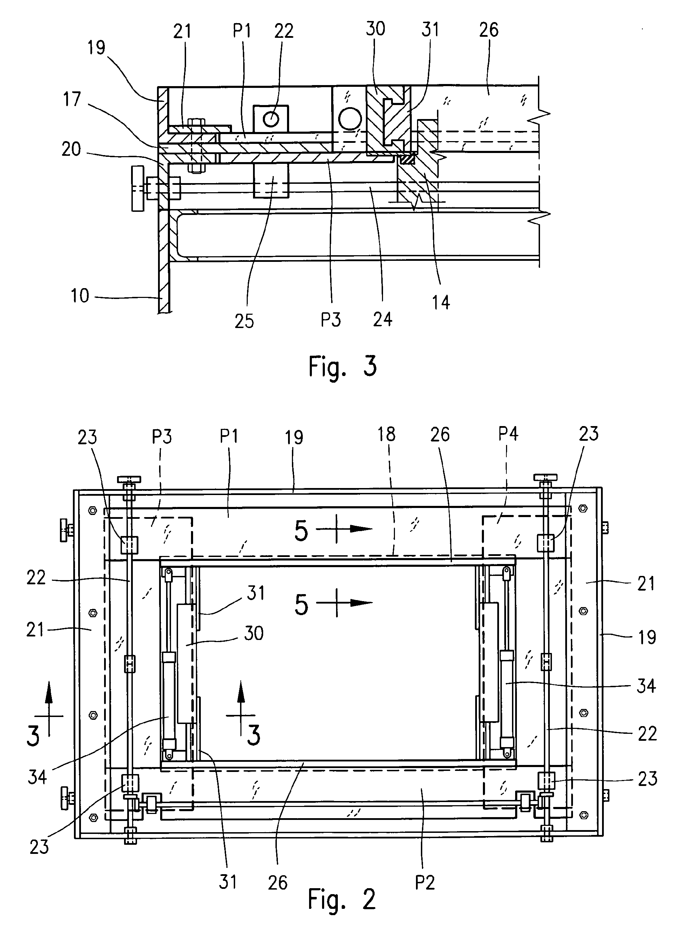

As shown in the cross-section of figure 1, and top view of figure 2, a thermoforming machine for a thermoplastic sheet material, basically comprises a box shaped body 10 defining a chamber 11 connectable to a vacuum source and/or to pressurized air source.

The box 10 is partially closed by a table 12 conformed with a large rectangular window aperture, through which a shaping mold 13, movably supported inside chamber 11 can protrude. The shaping mold 13 is fixed in a removable manner, to a platen 14 which may be moved vertically between a lowered position, shown in fig. 1, and a raised position in which the mold protrudes partially or totally from the window, to shape a sheet 15 of thermoplastic material locked between the table 12 and an upper vertically movable locking frame 16.

A thermoforming machine also includes, in a known manner, a heating system for heating the sheets 15 of thermoplastic material, which has not been shown since it does not form part of the invention.

The table 12 comprises a steady central plate 17, also called base plate, having planar upper and bottom surfaces and a large rectangular opening of a window 18 defined by longitudinally and crosswise extending peripheral sides; the base plate 17, has a peripheral frame formed, for example, by upper section bars 19 and lower section bars 20 fastened to the external edges of the plate 17.

The thermoforming table 12, above base plate 17, comprises a first pair of movable plates P1, P2, which extend in the direction of a first axis, for example in the direction of the longitudinal edges of window 18; the plates P1 and P2 are supported by the base plate 17 to slide crosswise in the direction of the second axis at a right-angle to the first one.

In an underlying position, the base plate 17 also supports a second pair of movable plates P3, P4 which extend crosswise, in the transversal direction of table 12, to slide in the first longitudinal direction of window 18. Plates P1 and P2 are movably supported in relation to each other, between a spaced apart or maximum opening position, shown in figure 2, and a close or minimum opening position, to continuously vary the width of the window 18; similarly, plates P3 and P4 are movably supported in relation to each other, between a spaced apart and a close position to vary continuously the length of window 18, entirely independently of plates P1 and P2.

Plates P1 and P2 slide along lateral guides 21 and in their approaching and retreating movements are controlled by two screw shafts 22 having opposite threading, which extend transversally to table 12; each threading of the control shafts 22 engages with a nut screw of a respective block 23, fixed above the plates P1 and P2.

The cross plates P3 and P4 in turn are supported in a sliding manner and are controlled in their approaching and retreating movements by two screw shafts 24, one only shown in figure 3, which extend longitudinally on the two sides of window 18; once again, each control shaft 24 has opposite threading which engages with nut screws of corresponding blocks 25 fixed to plates P3 and P4.

The control shafts 22 and 24 may be actuated automatically and/or manually through any electrical or mechanical device, or the plates P1, P2, P3 and P4 may be moved by pneumatic cylinders or by any other drive means.

With reference to figures 3 to 5, the characteristics of the movable plates P1, P2 and P3, P4 will be described in greater detail, and the relative sealing means in respect to the box 10 and the sheet 15 of plastic material to be thermoformed.

As previously indicated, the two plates P1 and P2 coplanar extend on the base plate 17, in the longitudinal direction of the window 18; each longitudinal plate P1, P2, along its internal edge, has a clamping bar 26, which longitudinally extends between the two cross edges of the rectangular opening of the window 18 of base plate 17.

Each bar 26 extends upwards from a respective longitudinal plate P1, P2, ending with an upper edge 27 which, with the upper edges of the other clamping bars defines a flat resting surface for supporting and locking a sheet 15 of thermoformable material.

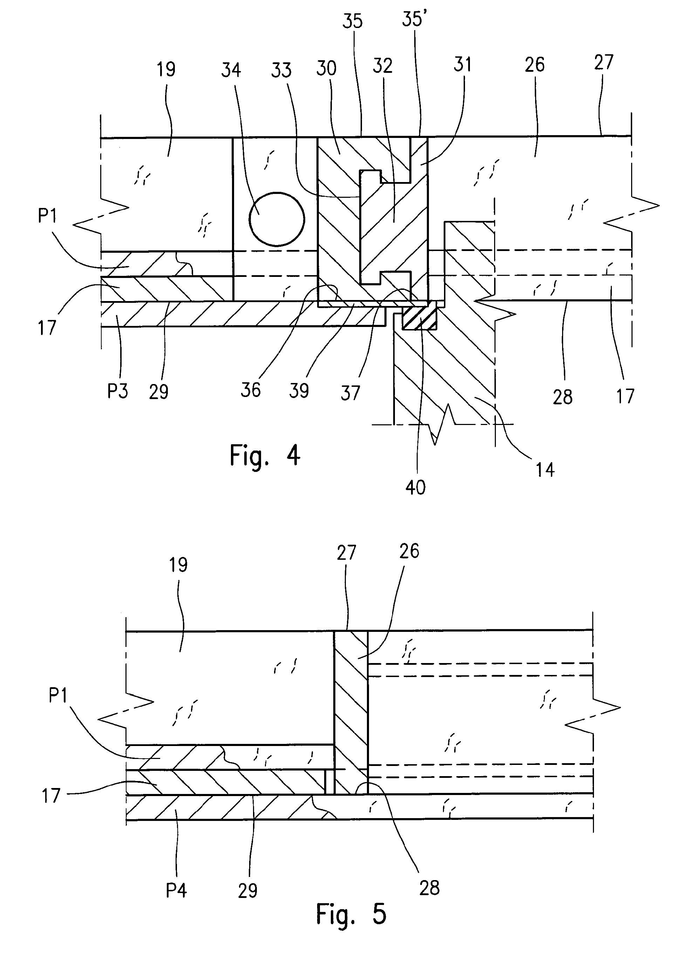

Figure 5 also shows how each locking bar 26 extends downwards, ending with a bottom edge 28 coplanar to bottom surface 29 of base plate 17, in contact with the cross plates P3 and P4.

In the case of longitudinal plates P1 and P2, the locking bars 26 are of non-extendable type and have a length equal to the maximum opening of window 18.

Otherwise, as shown in figures 2, 3 and 4, the cross plates P3 and P4, on their internal edge, have a telescopically or axially extendable clamping bars, maintained in contact with the longitudinal bars 26 to vary the length as the reciprocal position of plates P1 and P2 varies.

The telescopic clamping bars for plates P2 and P3 may be shaped in any way; in the example shown, each telescopic bar comprises a central section 30, fixed to the internal edge of the plate P2 and P3, and two lateral sections 31 freely and longitudinally sliding in respect to the central section 30. In this regard, each lateral section 31, on the side facing the central section 30, has a T-shaped longitudinal ribbing 32, or dovetail shaped, which slide along a correspondingly shaped guide slot 33 open at both sides of central section 30. A linear actuator, for example a pneumatic cylinder 34, or, alternatively, helicoidal thrust springs act on the two lateral sections 31 of each cross bar to maintain them in contact with the bars 26 of the longitudinal plates P1 and P2.

Also in the case of the cross plates P3 and P4, the central section 30 and the two lateral sections 31 of each telescopic clamping bar have upper edges 34 and 35, coplanar to the upper edges 27 of the two longitudinal bars 26, defining with the latter an upper flat surface for supporting and locking a sheet of thermoformable material 15.

In turn, the central section 30 and the lateral sections 31 of each telescopic bar have bottom edges 36 and 37 coplanar to the bottom edges 28 of the bars 26 to define a bottom flat surface for sealing against a shoulder surface of the mold 13 or its supporting platen 14 in the raised position of the same mold.

Figure 4 shows a further feature of table 12 for thermoforming machines according to the invention, which allows a high seal degree on the side of box 10, with the mold or its supporting platen, whatever the opening of the window 18 of the thermoforming table.

In particular, figure 4 shows that each telescopic clamping bar 30, 31, is supported by the respective transversal plate P3, P4, through a laminar or thin metal sheet 39, for example a one-millimeter thick steel sheet, just higher or just lower, fastened into a seat, flush to the bottom surfaces 28, 29, and along the internal edge of plates P3 and P4; the bar support sheet 39 extends for a short length towards the inside of the window, 18 beyond the inner edge of plates P3 and P4.

In this manner, when an edge of the platen 14 supporting the thermoforming mold 13, or an edge of the same mold comes into contact with the laminar or thin sheet 39, the small step formed by sheet 39 is sealed by a gasket 40 along the peripheral edges, which elastically yield to allow good seal both against the edge of the support sheets 39, and against the bottom edge 28 of longitudinal bars 26.

The seal under vacuum and/or pressured air conditions of the box 10, along the edges of the window 18 may also be allowed by gaskets, for example of the double-lipped type, not shown, housed in seat of the mobile plates, on the side facing the base plate 17.

It is understood from what has been described and shown in the accompanying drawings that a clamping table for sheets of thermoformable material has been provided suitable for sealing the box of thermoforming machines, which practically is of universal use, since it may be applied to any type of box without the need for any additional support frame, guaranteeing in all cases a high seal degree.

It is understood that what has been described and shown in the accompanying drawings has been given purely in order to illustrate the clamping table according to the invention. Therefore, other variations or modifications may be made to the entire table or its parts, without thereby departing from the claims.

## Claims

1. An adjustable clamping table (12) for thermoforming machines, comprising:
first and second pair of longitudinally and crosswise extending support plates (P1, P2; P3, P4) which are movable in relation to each other on overlapping planes, said support plates (P1, P2; P3, P4) having internal edges conformed to define a rectangular aperture of an adjustable window through which a thermoforming mold (13) extends, **characterized by** comprising:
a stationary base plate (17) conformed with longitudinal and cross sides defining the rectangular opening of the window, said base plate (17) having upper and bottom planar surfaces;
a pair of upper plates (P1, P2) slidably supported by the base plate (17), in a first direction;
a pair of bottom plates (P3, P4) slidably supported base plate (17), in a second direction at a right-angle to the sliding direction of the upper plates (P1, P2);
a clamping bar (26; 30, 31) along an internal edge of each sliding plate (P1, P2; P3, P4), the clamping bars having co-planar upper edges (27, 35) defining an upper surface for supporting and locking a sheet (15) of thermoformable material, and bottom edges (28, 29) defining a flat sealing surface for the thermoforming mold, coplanar to the bottom surface of the base plate (17);
metal sheets (39) for supporting the clamping bars extending from the internal edge of each bottom sliding plate (P3, P4);
and elastically yielding sealing means between the mold and said metal sheets (39).

2. The clamping table for thermoforming machines according to claim 1, **characterized by** the fact that the clamping bars (26; 30, 31) of the upper and lower mobile plates (P1, P2; P3, P4) having a lower sealing surface coplanar to the lower surface of the base plate (17).

3. The clamping table for thermoforming machines according to claim 1, **characterized by** the fact that the clamping bars (30, 31) of the lower mobile plates (P3, P4) are telescopically adjustable.

4. The clamping table for thermoforming machines according to claim 3, **characterized by** the fact that each telescopic clamping bar (30, 31) includes a central section (30) fixed to an internal edge of a respective lower plate (P3, P4), and a lateral section (31) axially sliding at each end of the central section (30), and thrust means to maintain the lateral sections (31) of the (30, 31) in contact with the clamping bars (26) of the upper mobile plates (P1, P2).

5. The clamping table for thermoforming machines according to claim 1, **characterized by** including manually and/or automatically operated control means (22, 34) for adjustably sliding of the upper and lower mobile plates (P1, P2; P3, P4).
